Europäisches Patentamt

**European Patent Office**

**Office européen des brevets**

(11) Veröffentlichungsnummer: **0 076 886**
**A1**

# (12) EUROPÄISCHE PATENTANMELDUNG

(21) Anmeldenummer: **82101067.5**

(22) Anmeldetag: **12.02.82**

(51) Int. Cl.³: **G 01 N 21/31**

(30) Priorität: **22.09.81 DE 3137660**

(43) Veröffentlichungstag der Anmeldung: **20.04.83**
**Patentblatt 83/16**

(84) Benannte Vertragsstaaten: **AT BE CH FR IT LI LU NL**

(71) Anmelder: **H. MAIHAK AG, Semperstrasse 38, D-2000 Hamburg 60 (DE)**

(72) Erfinder: **Nestler, Volker, Dr, Dipl.Phys., Garleff-Bindtweg 58, D-2000 Hamburg 65 (DE)**
Erfinder: **Olsowski, Wolfgang, Dr. Dipl.Phys., Bekwisch 5, D-2000 Norderstedt (DE)**

(74) Vertreter: **Meyer-Roxlau, Reiner Ferdinand, Dipl.-Ing. et al, Patentanwälte Dr. Franz Lederer Dipl.-Ing. Reiner F. Meyer-Roxlau Lucile-Grahn-Strasse 22, D-8000 München 80 (DE)**

(54) Verfahren und Vorrichtung zur Messung des Konzentrationsverhältnisses zweier IR-, NIR-, VIS- oder UV-Strahlung absorbierender Komponenten eines Komponentengemischs.

(57) Verfahren und Vorrichtung zur Messung des Konzentrationsverhältnisses zweier IR-, NIR-, VIS- oder UV-Strahlung absorbierenden Gasen in einer Gasmatrix oder zweier in einem Lösungsmittel gelösten Substanzen im Wege der nichtdispersiven Einstrahl-Photometrie durch Modulation der Meßstrahlung zur Ausbildung von vier zeitlich aufeinanderfolgenden, unterschiedlichen spektralen Verteilungsfunktionen bei Verwendung eines Detektors für die modulierte Strahlung, dessen Ausgangssignal einer elektronischen Fourieranalyse unterzogen wird, wobei der Quotient aus erstem und zweitem Fourierkoeffizienten das Maß für das zu messende Konzentrationsverhältnis darstellt.

Verfahren und Vorrichtung zur Messung des Konzentrationsverhältnisses zweier IR-, NIR-, VIS- oder UV-Strahlung

absorbierender Komponenten eines Komponentengemischs

Die Erfindung betrifft zum einen ein Verfahren und zum anderen eine Vorrichtung zur Messung des Konzentrationsverhältnisses zweier IR-, NIR-, VIS- oder UV-Strahlung an beliebiger Spektralposition absorbierenden Gasen in einer Gasmatrix oder zweier in einem Lösungsmittel gelösten Substanzen gemäß Oberbegriff der Patentansprüche 1 bzw. 6 .

Aus der DE-OS 24 60 895 ist ein Verfahren bekannt, das es gestattet, das Konzentrationsverhältnis zweier Gase oder zweier in einem Lösungsmittel gelöster Substanzen unmittelbar zu erfassen, ohne daß die Konstanz anderer Einflußgrößen, wie z.B. der Temperatur, des Drucks, der Strömungsgeschwindigkeit und der Konzentration einer Komponente oder der Gesamtkonzentration beider Komponenten, erforderlich wäre.

Das Verfahren ist jedoch nur zur Messung des Konzentrationsverhältnisses solcher Meßkomponenten anwendbar, deren Absorptionsbanden einen verhältnismäßig geringen Abstand voneinander aufweisen.

Charakteristisch für dieses Verfahren ist weiterhin, daß die Intensität der vom zu untersuchenden Komponentengemisch durchgelassenen Strahlung in drei benachbarten, engen Spektralbereichen gemessen wird, die sich im Minimum zwischen den Absorptionsmaxima der beiden Meßkomponenten befinden müssen. Offen erkennbar ist durch diese Bedingung der Anwendungsbereich des Verfahrens erheblich eingeschränkt.

Der Erfindung liegt die Aufgabe zugrunde, das Verfahren und die Vorrichtung der eingangs bezeichneten Gattung so auszubilden, daß der Quotient der Konzentrationen zweier Gase oder zweier gelöster Substanzen, die IR-, NIR-, VIS- oder UV-Strahlung absorbieren, unmittelbar und unabhängig von anderen Einflußgrößen, wie beispielsweise Temperatur, Druck, Strömungsgeschwindigkeit oder Summenkonzentration gemessen werden kann, ohne daß die relative Lage der Absorptionsbanden von Bedeutung ist.

Erfindungsgemäß wird diese Aufgabe in verfahrenstechnischer bzw. vorrichtungstechnischer Hinsicht durch die Merkmale des kennzeichnenden Teils der Patentansprüche 1 bzw. 6 gelöst.

Vorteilhafte Weiterbildungen sowohl in verfahrenstechnischer als auch in vorrichtungstechnischer Hinsicht sind aus den jeweils zugehörigen Unteransprüchen zu ersehen.

Zur Messung des Konzentrationsverhältnisses zweier optische Strahlung absorbierender Meßkomponenten wird ein nichtdispersives Einstrahl-Photometer verwendet, das als Modulationseinrichtung ein Gasfilter- oder Interferenzfilter-Karussell enthält. Die Modulationseinrichtung prägt der Meßstrahlung, die beim Durchlauf durch eine Meßstrecke eine für die Meßkomponente spezifische spektrale Absorption erfährt, zeitlich nacheinander vier unterschiedliche spektrale Verteilungsfunktionen auf, die durch Dunkelphasen voneinander getrennt sind. Die so modulierte Strahlung trifft schließlich auf einen Detektor, dessen Ausgangssignal einer elektronischen Fourier-Analyse unterzogen wird. Der Quotient aus erstem und zweitem Fourier-Koeffizienten stellt das Maß für das Konzentrationsverhältnis der beiden die optische Strahlung absorbierenden Meßkomponenten dar.

Die zugehörige Vorrichtung ist in ihrer Konstruktion einfach, bei Freistrahlanwendungen einsetzbar und unempfindlich gegenüber Veränderungen im Strahlengang, die beispielsweise auf Fensterverschmutzungen zurückzuführen sind.

Im folgenden wird die Erfindung beispielhaft und unter gleichzeitiger Bezugnahme auf die Zeichnungen weiter ins einzelne gehend erläutert; in den Zeichnungen zeigen:

Fig. 1　　schematisch den grundsätzlichen Aufbau einer erfindungsgemäßen Meßvorrichtung,

Fig. 2　　den Blendenradmodulator der Fig. 1,

Fig. 3A　den periodischen Wechsel der Lichtintensitäten der Strahlung, wenn keine Meßkomponente vorliegt, die eine Strahlungsabsorption zur Folge hätte,

Fig. 3B　schematisch die entsprechende Spektralverteilung der Intensitäten,

Fig. 3C　den Transmissionsverlauf bei durch die Meßkomponenten bedingter Absorption,

Fig. 3D　die Abschwächung zweier Lichtintensitäten bei unveränderter Aufrechterhaltung der beiden anderen Lichtintensitäten,

Fig. 3E　den Effekt der Meßkomponenten auf die zeitliche Abfolge der Lichtintensität,

Fig. 4     das Blockschaltbild der Meßwertverarbeitungselektronik,

Fig. 5     eine möglicherweise vorzusehende Kompensationseinrichtung
und

Fig. 6     für ein bestimmtes Anwendungsbeispiel aus der Gasanalyse
den Verlauf der Meßsignale in Diagrammdarstellung.


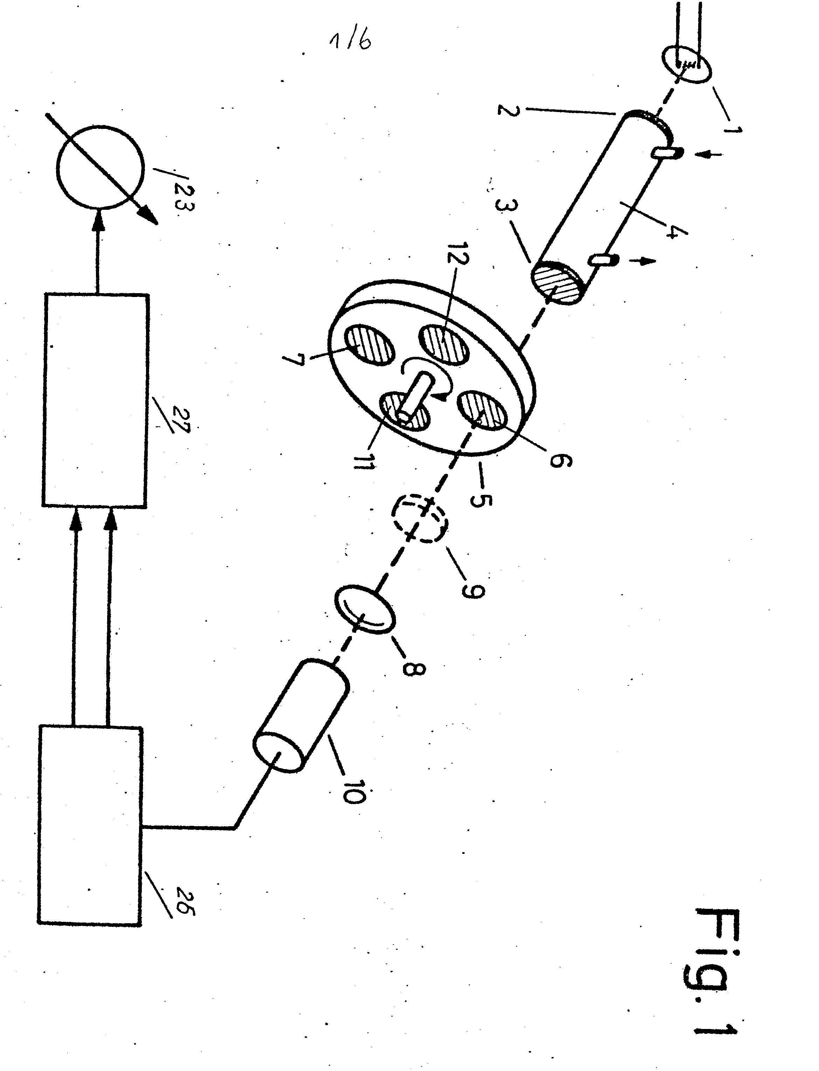

Das Einstrahl-Photometer gemäß Fig. 1 verfügt in seinem grundsätzlichen Aufbau über einen Strahler 1, nämlich beispielsweise im IR-Bereich
einen     thermischen Strahler, der eine Breitband-Strahlung emittiert, über einen Meßraum 4 mit den darin enthaltenen Meßkomponenten,
welcher Meßraum 4 von der Meßstrahlung durchsetzt wird. Der Meßraum 4 ist gegenüber seiner Umgebung mit Hilfe von Fenstern 2 und 3
abgedichtet, die im interessierenden Spektralbereich für die Meßstrahlung durchlässig sind. Der Meßraum 4 kann beispielsweise aus einer
Küvette bestehen; er kann aber auch ein Prozeßraum selbst sein, so
daß es sich dann bei dem Meßverfahren um ein Freistrahlverfahren
handelt.


Im Meßraum 4 erfährt die spektrale Verteilung der Lichtintensität eine
für die Konzentration des Meßobjekts charakteristische Veränderung.
Nach dem Austritt aus dem Meßraum 4 durch das Fenster 3 hindurch
wird die Strahlung durch ein mit einer Kreisfrequenz $\omega$ rotierendes
Blendenrad 5 moduliert, und zwar sowohl hinsichtlich der Intensität
als auch in spektraler Hinsicht. Die Wirkungsweise des als Modulator
wirkenden Blendenrads 5 wird noch genauer erläutert werden. Im
Anschluß an die vom Blendenrad 5 gebildete Modulationseinrichtung
wird die Strahlung mittels einer Linse 8 auf einen Breitband-Detektor 10 fokussiert, der im IR- und im NIR-Bereich beispielsweise ein
pyroelektrischer Empfänger, ein Halbleiterdetektor oder ein Bolometer sein kann. Für den Fall, daß die im Blendenrad 5 vorgesehenen
Filter 6 und 7 Gasfilter sind, befindet sich im Strahlengang zusätzlich ein feststehendes Interferenzfilter 9. Das Modulatorblendenrad 5 verfügt des weiteren über Filter 11 und 12 und kann auch zwischen dem Strahler 1 und dem Meßraum 4 oder sogar im Meßraum 4 selbst angeordnet sein. Im übrigen verfügt das Photometer der Figur 1 über einen Fourieranalysator 26, einen Dividierer oder Quotientenbilder 27 und eine Anzeigevorrichtung 23.

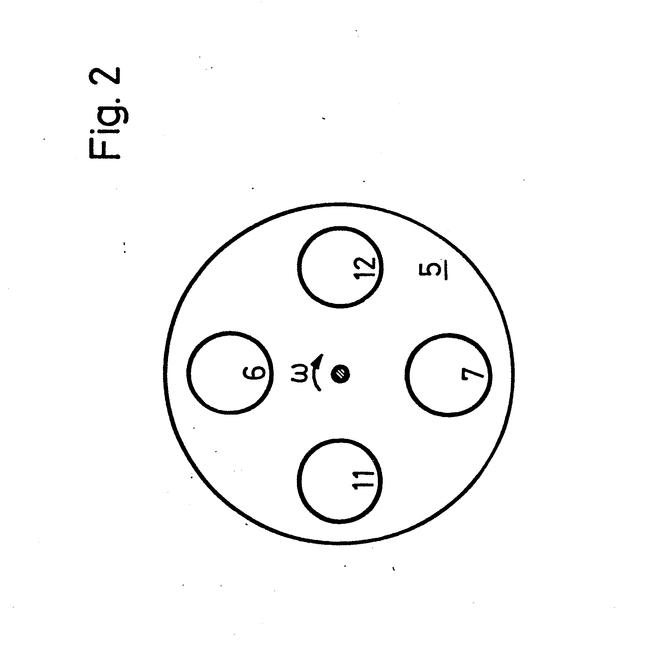

Die in Figur 2 schematisch dargestellte beispielhafte Ausführungsform des Modulatorblendenrads 5 verfügt über vier Interferenzfilter 6, 7, 11 und 12, die abwechselnd mit der Kreisfrequenz $\omega$ -bezogen auf das Blendenrad 5 - in den Strahlengang geschwenkt werden, so daß die Strahlung wegen der Vorsehung von insgesamt vier Filtern mit der Kreisfrequenz $4\omega$ moduliert wird. Das Transmissionsmaximum des Interferenzfilters 6 liegt bei derjenigen Wellenlänge $\lambda_A$, bei der die eine Meßkomponente A ihre Absorptionsbande aufweist.

Die Zentrumswellenlänge $\lambda_o$ des Filters 11 liegt nicht im Bereich der Absorptionsbanden der Meßkomponenten A und B. Das Interferenzfilter 7 transmittiert denjenigen Spektralbereich, in dem die Meßkomponente B Strahlung absorbiert. Das Filter 12 entspricht dem Filter 11.

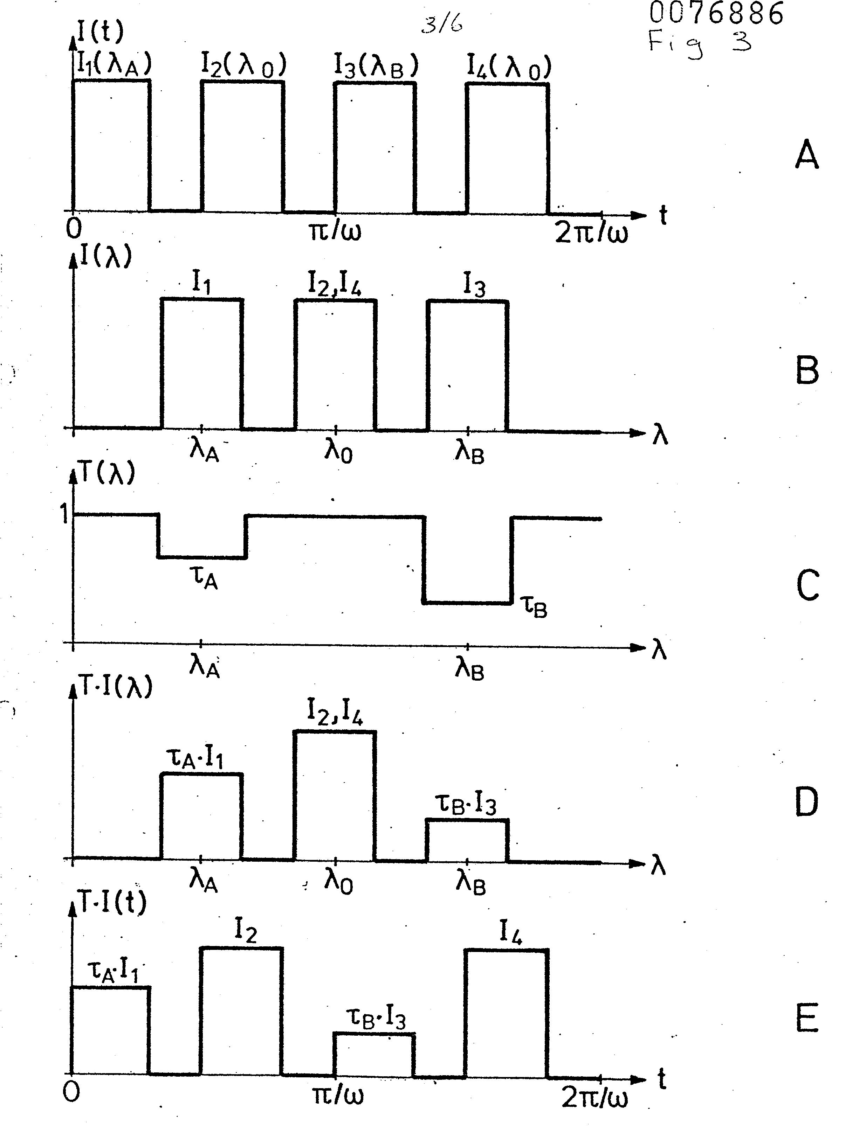

Insgesamt unterliegt die Strahlung des Strahlers 1 also einer zeitlichen und spektralen Modulation, wie dies in den Fig. 3A und 3E schematisch dargestellt ist.

Fig. 3A zeigt den periodischen Wechsel der Lichtintensität, ohne daß eine Meßkomponente vorliegt, weshalb keine Strahlungsabsorption verursacht ist. Fig. 3B zeigt schematisch die entsprechende Spektralverteilung der Intensitäten $I_1$ bis $I_4$.

Die Absorption durch die Meßkomponenten A und B verursacht Defekte in der Transmission ($\tau_A$, $\tau_B < 1$) der Meßstrecke bei den spezifischen Spektralstellen $\lambda_A$ und $\lambda_B$ (Fig. 3C). Dies führt zu einer Abschwächung der Lichtintensitäten $I_1$ bei $\lambda_A$ bzw. $I_3$ bei $\lambda_B$, während die Lichtintensitäten $I_2$ und $I_4$ unbeeinflußt bleiben (Fig. 3D).

In Fig. 3E ist der Effekt der Meßkomponenten A und B auf die zeitliche Abfolge der Lichtintensitäten dargestellt. Der Meßeffekt besteht
also in dem Unterschied der Signale der Fig. 3A und 3E.

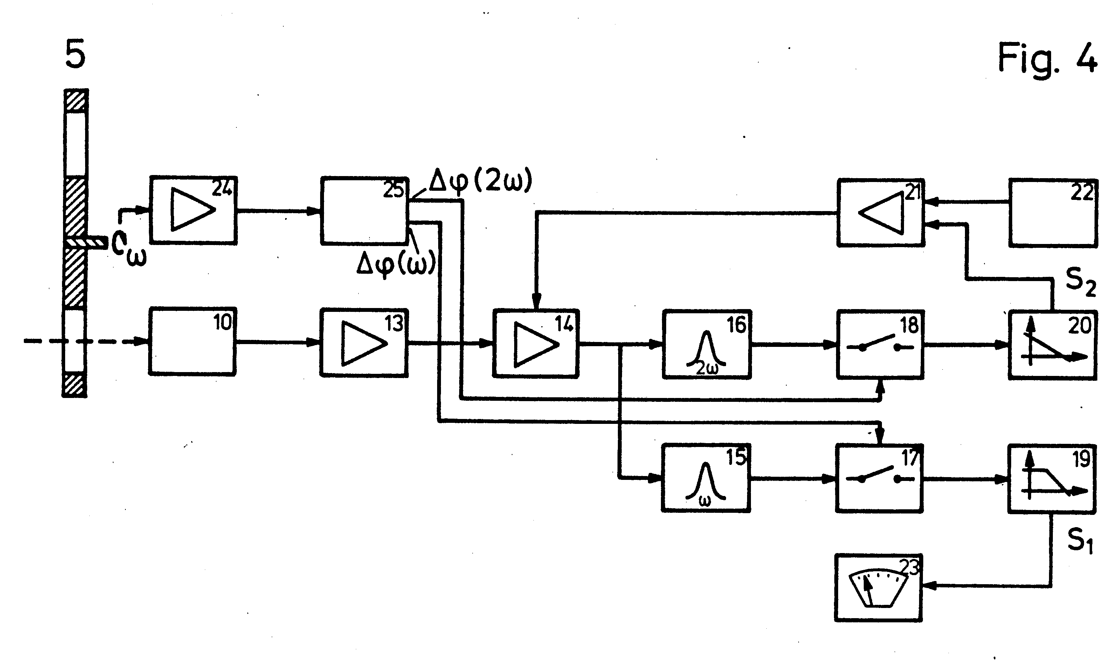

Die Auswertung des Ausgangssignals des Detektors 10 erfolgt mittels einer
Meßwertverarbeitungselektronik, die im wesentlichen aus einem Zwei-Kanal-
Lock-In-Verstärker besteht, dessen Arbeitsweise das Blockschaltbild
der Fig. 4 erläutert. Die vom Modulatorblendenrad 5 mit der Kreisfrequenz $4\omega$ modulierte Intensität des Lichts des Strahlers 1 wird im
Detektor 10 in ein elektrisches Signal umgesetzt, das zunächst durch
einen Vorverstärker 13 und dann durch einen regelbaren Verstärker 14
angehoben wird. Anschließend erfolgt eine Zerlegung des so behandelten
Detektorsignals in Teile seines Frequenzspektrums (Fourieranalyse).

In einem ersten Meßkanal wird der Signalanteil mit der Frequenz $\omega$
durch ein selektives Filter 15 extrahiert und durch einen nachgeschalteten Gleichrichter 17 phasensynchron zu $\omega$ gleichgerichtet;
dies führt dann nach anschließender Glättung in einem Tiefpaß 19
zu einem geglätteten Signal $S_1$ für den ersten Kanal.

Ähnlich wird im zweiten Meßkanal verfahren. Ein Filter 16 selektiert
den Signalanteil mit der Frequenz $2\omega$ , das durch einen Gleichrichter 18
phasensynchron zu $2\omega$ gleichgerichtet wird. Die Steuersignale für $\omega$
und $2\omega$ werden durch einen Referenzsignalverstärker 24 und einen
Phasenschieber 25 erzeugt. Das Signal des zweiten Meßkanals wird
durch einen Integrator 20 gesiebt und auf einen Regelverstärker 21
gegeben, der das Signal $S_2$ mit einer Referenzspannung eines Referenzspannungsgebers 22 vergleicht und über den regelbaren Verstärker 14 konstant hält. Somit ist gewährleistet, daß das durch
den Tiefpaß 19 geglättete Signal $S_1$ des ersten Kanals, das schließlich an einem Anzeigegerät 23 zur Anzeige gebracht wird, dem

0076886

Quotienten aus erster und zweiter Fourierkomponente des Signalgemischs aus den Fig. 3A und 3E proportional ist.

Die Analyse des zeitlichen Verlaufs der Signale ergibt für den ersten
und den zweiten Fourierkoeffizienten $F_1$ und $F_2$ unter der Annahme,
daß die geometrischen Formen der Filterfassungen des Modulatorblendenrads 5 exakt gleich sind :

$$F_1 = a_1 \cdot ( \tau_A \cdot I_1 - \tau_B \cdot I_3) + b_1 \cdot (I_2 - I_4) \qquad (1)$$

$$F_2 = a_2 \cdot \left[ -( \tau_A \cdot I_1 + \tau_B I_3) + (I_2 + I_4) \right] \qquad (2)$$

Dabei sind $a_1$, $b_1$ und $a_2$ Gerätekonstanten, die durch die geometrische
Anordnung bestimmt sind.

Unter der Annahme, daß die einzelnen Filter 6, 7, 11 und 12 so ausgesucht sind, daß ihre integralen Transmissionen gleich sind, also
$I_1 = I_2 = I_3 = I_4$ gilt, ergeben sich für die Fourierkoeffizienten :

$$F_1 = a_1 \cdot ( \tau_A - \tau_B) \cdot I_1 \qquad (3)$$

$$F_2 = a_2 \cdot ( - \tau_A - \tau_B + 2) \cdot I_1 \qquad (4)$$

Das zur Anzeige gebrachte Meßsignal ist der Quotient aus diesen
beiden Größen:

$$S_1 \sim \frac{\tau_A - \tau_B}{2 - \tau_A - \tau_B} \qquad (5)$$

Durch die Quotientenbildung wird das Signal unabhängig von der Lichtintensität und damit driftfrei in Hinblick auf "graue", also spektral unabhängige Intensitätsänderungen, wie sie beispielsweise durch eine Fensterverschmutzung bedingt werden.

Die Transmissionen $\tau_A$ und $\tau_B$ der beiden Meßkomponenten A und B sind Integralfunktionen der spektralen Transmissionen gemittelt über die jeweiligen Interferenz-Durchlaßkurven.

Für kleine Produkte $\overline{\varepsilon_{A,B}(\lambda)} \cdot c_{A,B} \cdot 1$, wobei $\overline{\varepsilon(\lambda)}$ der im Durchlaß-bereich des Interferenzfilters gemittelte spezifische Absorptionskoeffizient, c die Konzentration der jeweiligen Meßkomponente und 1 die optische Weglänge im Meßmedium ist, läßt sich die Transmission in eine Taylorreihe entwickeln:

$$\tau = 1 - \overline{\varepsilon} \cdot c1 \pm \dots \tag{6}$$

Diese Näherung läßt sich für beide Meßkomponenten A und B durch geeignete Wahl der Zentrumswellenlänge der Interferenzfilter sowie der Länge 1 des möglicherweise als Küvette ausgebildeten Meßraums 4 immer einstellen.

Führt man den Quotienten Q der Konzentration C beider Meßkomponenten A und B ein, nämlich

$$Q = \frac{C_A}{C_B} \tag{7}$$

so ergibt sich als Meßgröße

$$S_1 \sim \frac{D - Q}{D + Q} \tag{8}$$

wobei D eine Konstante ist, bestimmt durch die spektroskopischen Daten der einzelnen Meßkomponenten A und B, nämlich

$$D = \frac{\overline{\varepsilon_B(\lambda_B)}}{\overline{\varepsilon_A(\lambda_A)}} \tag{9}$$

Nach dieser Verfahrensweise ist es also möglich, ein Meßsignal $S_1$ als Meßgröße zu erzeugen, das eine eineindeutige monotone Funktion des Konzentrationsverhältnisses zweier Meßkomponenten in einem Komponentengemisch darstellt.

Es ist nicht zu erwarten, daß alle vier Interferenzfilter 6, 7, 11 und 12 des Modulationsblendenrads 5 dieselbe integrale Transmission aufweisen, weil sie beispielsweise durch Fertigungsschwankungen hinsichtlich der Lage des Transmissionsmaximums und der Halbwertsbreite Streuungen unterliegen. Darüber hinaus besitzen der Strahler 1 und der Detektor 10 Spektralgänge, die die integrale Transmission auf den vier durch die vier Interferenzfilter gebildeten Meßkanälen beeinflussen. Solche Differenzen stören aber beim Gerätabgleich, wie sie Voraussetzung für die Gültigkeit der Gleichungen (3), (4), (5) und (8) sind.

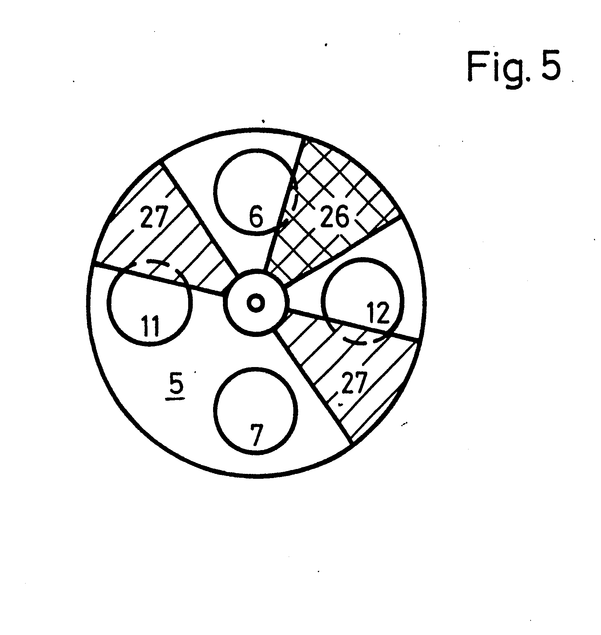

Zur Kompensation kann beispielsweise die Einrichtung vorgesehen werden, die in Fig. 5 dargestellt ist. Nach der dortigen Darstellung befinden sich auf dem Modulationsblendenrad 5 zusätzlich zu den vier bereits mehrfach erwähnten Interferenzfiltern 6, 7, 11 und 12 zwei unabhängig voneinander einstellbare Blenden, die die einzelnen Filter mehr oder weniger abdecken können.

Das dargestellte einzelne Blendensegment 26 dient zum Abgleich des ersten Fourierkoeffizienten und das Blendensegment 27, das symmetrisch in zwei gegenüber liegende Filter eingreift, zum Abgleich des zweiten Fourierkoeffizienten. Zum Abgleich werden, ohne daß die Meßkomponenten A und B im Meßraum 4 vorliegen dürfen, die Fourierkoeffizienten $F_1$ und $F_2$ mittels der beiden Blenden, also zum einen des Blendensegments 26 und zum anderen des zweiteiligen Blendensegments 27, getrennt nacheinander grob auf Null eingestellt. Der Abgleich der Restsignale erfolgt elektronisch durch den Phasenschieber 25 (Fig. 4).

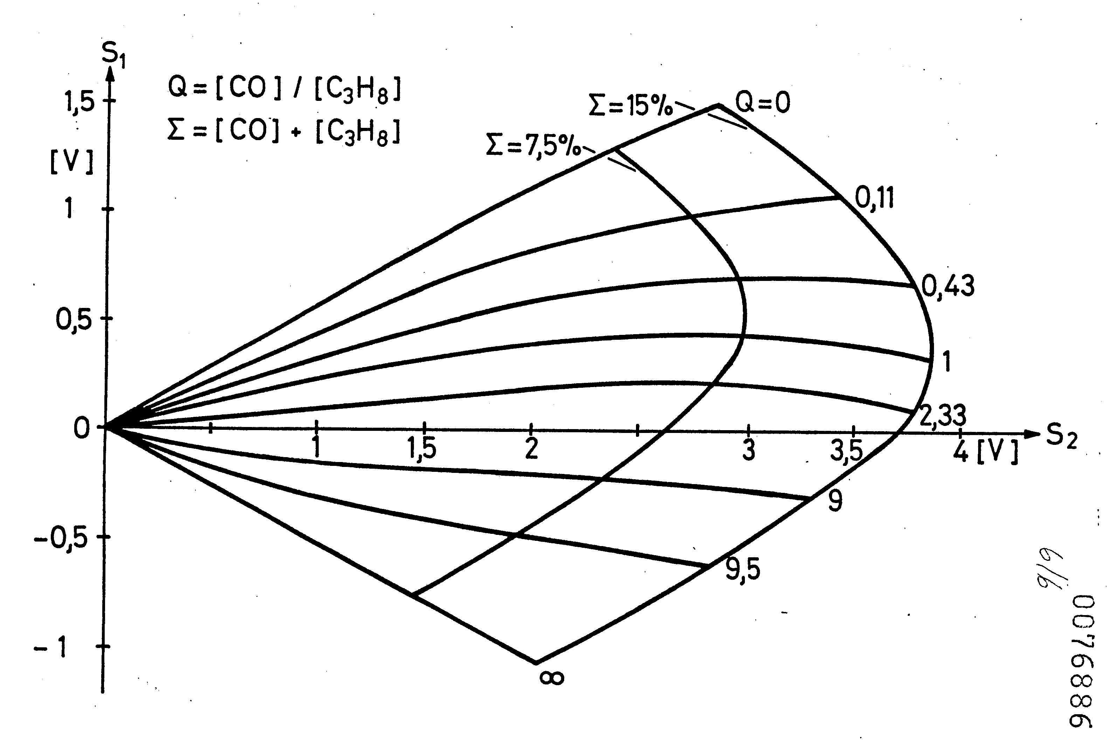

Fig. 6 zeigt ein Anwendungsbeispiel aus der Gasanalyse für das neue Quotientenmeßverfahren.

Gemessen werden sollte das Konzentrationsverhältnis $Q = [CO]/[C_3H_8]$, wobei die IR-Banden von Kohlenmonoxid bei ca. 4,7 μm und von Propan bei ca. 3,4 μm ausgenutzt werden sollten.

Es wurden daher Interferenzfilter mit folgenden Spektraldaten ausgewählt:

$$\lambda_A = 4,69 \mu m; \quad HWB = 0,18 \ \mu m$$ (HWB = Halbwertsbreite)
$$\lambda_B = 3,27 \mu m; \quad HWB = 0,17 \ \mu m$$
$$\lambda_0 = 5,24 \mu m; \quad HWB = 0,30 \ \mu m$$

Die Küvettenlänge l betrug 20 cm.

Um die Vorzüge und Grenzen des erfindungsgemäßen Verfahrens aufzuzeigen, wurde in Fig. 6 eine Darstellung von $S_1$ ($\sim I_2 - I_1$) über $S_2$ ($\sim I_1 + I_2$) gewählt.

Die Signale wurden gemessen, indem der Regelverstärker 21 (Fig. 4) zwischen den beiden Lock-In-Kanälen ω und 2ω außer Funktion gesetzt wurde und die Ausgangssignale $S_1$ und $S_2$ direkt auf die Eingänge eines X - Y -Schreibers gegeben wurden.

Das Quotientensignal ergäbe sich dann aus der Steigung des Kurvenverlaufs des Signals $S_1$ als Funktion von $S_2$ in jedem Punkt.

0076886

Bei der einen Kurvenschar wurde als Parameter der Quotient
$Q = [CO] / [C_3H_8]$ fest eingestellt und die Summenkonzentration
$[CO] + [C_3H_8]$ kontinuierlich von 0 bis auf 15 Vol % variiert.

Die anderen beiden Kurven wurden erhalten, indem bei vorgegebener
Summenkonzentration der Konzentrationsquotient kontinuierlich von 0
bis $\infty$ durchgefahren wurde.

Wie aus Fig. 6 zu ersehen ist, ist der Zusammenhang zwischen $S_1$
und $S_2$ ab einer bestimmten Summenkonzentration, die etwa bei
5 Vol % liegt, nicht linear. Ab hier verläßt man den Gültigkeitsbereich der Näherung der Gleichungen (6) bzw. (8) aufgrund des
nichtlinearen Zusammenhangs zwischen der Transmission und der
Konzentration eines Gases. Bis zu einer Summenkonzentration von
5 Vol % ist also der Quotient $S_1/S_2$ unabhängig von der Verdünnung
des Gasgemischs und nur ausschließlich eine Funktion des Quotienten $[CO] / [C_3H_8]$.

Wollte man den Arbeitsbereich des Meßverfahrens zu höheren Summenkonzentrationen hin erweitern, müßte man die Meßraumküvette verkürzen oder aber die Transmissionen der Interferenzfilter aus den
Zentren der Gasabsorptionsbanden in deren Flanken verlagern.

Da sowohl $S_1$ als auch $S_2$ proportional zur angebotenen Lichtintensität
des Strahlers 1 sind, bewirkt eine Fensterverschmutzung nur eine
Verschiebung der Kurven der Fig. 6 in Richtung auf den Nullpunkt,
so lange die Intensitätsabnahme spektral unabhängig ist. Innerhalb des
Linearitätsbereichs $S_1 (S_2)$ bleibt der Quotient $S_1/S_2 = f(Q)$ davon unbeeinflußt.

0076886

Patentansprüche
------------------------

1. Verfahren zur Messung des Konzentrationsverhältnisses zweier
   IR-, NIR-, VIS- oder UV-Strahlung an beliebiger Spektralposition
   absorbierender Gase in einer Gasmatrix oder zweier in einem Lösungsmittel gelöster Substanzen, dadurch gekennzeichnet, daß der
   einen mit dem Komponentengemisch gefüllten Meßraum durchsetzenden Strahlung vor, in oder hinter dem Meßraum mittels einer Modulation mit einer Kreisfrequenz ($\omega$) vier periodisch aufeinander
   folgende, jeweils durch Dunkelphasen voneinander getrennte spektrale Zustände aufgeprägt werden, von denen drei unterschiedlich
   sind, daß der erste Zustand mittels eines Filters eingestellt wird,
   das im Bereich des Absorptionsspektrums der einen Meßkomponente (A) selektiv absorbiert oder selektiv transmittiert, daß der
   dritte Zustand mittels eines Filters eingestellt wird, das im Bereich
   des Absorptionsspektrums der anderen Meßkomponente (B) selektiv
   absorbiert oder selektiv transmittiert, daß der zweite und der vierte
   Zustand jeweils durch Gasfilter, die beide Meßkomponenten (A, B)
   enthalten, oder durch Interferenzfilter, die bei keiner der beiden
   Meßkomponenten (A, B) transmittieren, eingestellt werden, daß
   der diskontinuierliche wellenlängenmodulierte Intensitätsverlauf
   mit einem Breitband-Detektor gemessen wird und daß das Ausgangssignal dieses Detektors mit den Kreisfrequenzen $\omega$ und $2\omega$
   phasenempfindlich gleichgerichtet wird zur Bildung von zwei Signalen ($S_\omega$ und $S_{2\omega}$ ) und daß der Quotient dieser Signale gebildet wird, und zwar als Maß für das zu messende Konzentrationsverhältnis der Meßkomponenten (A und B).

- 2 -  0076886

2. Verfahren nach Anspruch 1, dadurch gekennzeichnet, daß der erste Zustand mittels eines Gasfilters eingestellt wird, das im Bereich des Absorptionsspektrums der einen Meßkomponente (A) selektiv absorbiert.

3. Verfahren nach Anspruch 1, dadurch gekennzeichnet, daß der erste Zustand mittels eines Interferenzfilters eingestellt wird, das im Bereich des Absorptionsspektrums der einen Meßkomponente (A) selektiv transmittiert.

4. Verfahren nach einem der Ansprüche 1 bis 3, dadurch gekennzeichnet, daß der dritte Zustand mittels eines Gasfilters eingestellt wird, das im Bereich des Absorptionsspektrums der zweiten Meßkomponente (B) selektiv absorbiert.

5. Verfahren nach einem der Ansprüche 1 bis 3, dadurch gekennzeichnet, daß der dritte Zustand mittels eines Interferenzfilters eingestellt wird, das im Bereich des Absorptionsspektrums der zweiten Meßkomponente (B) selektiv transmittiert.

6. Vorrichtung zur Messung des Konzentrationsverhältnisses zweier IR-, NIR-, VIS- oder UV-Strahlung an beliebiger Spektralposition absorbierender Gase in einer Gasmatrix oder zweier in einem Lösungsmittel gelöster Substanzen, dadurch gekennzeichnet, daß einem Strahler (1) ein Spektralmodulator (5) und ein mit dem zu untersuchenden Komponentengemisch gefüllter Meßraum (4) nachgeordnet sind, daß im Strahlengang hinter beiden ein Breitband-Detektor (10) angeordnet ist, und zwar unter Vorschaltung einer die Strahlung auf ihn fokussierenden Linse (8), daß der Spektralmodulator (5) mit einer Kreisfrequenz ($\omega$) zu arbeiten in der Lage ist und vier Filter aufweist, wobei das erste Filter (beispielsweise 6) im Bereich des Absorptionsspektrums der

0076886

einen Meßkomponente (A) selektiv absorbiert oder selektiv transmittiert, das zweite Filter (beispielsweise 7) im Bereich des Absorptionsspektrums der anderen Meßkomponente (B) selektiv absorbiert oder selektiv transmittiert und das zweite und das vierte
Filter (beispielsweise 11 und 12) Gasfilter, die beide Meßkomponenten (A und B) enthalten, oder Interferenzfilter sind, die bei
keiner der beiden Meßkomponenten (A und B) transmittieren,
daß der Detektor (10) ausgangssignalseitig an eine Meßwertverarbeitungseinrichtung angeschlossen ist, die ausgangssignalseitig an ein
Anzeigegerät (23) angeschlossen ist.

7. Vorrichtung nach Anspruch 6, dadurch gekennzeichnet, daß das
erste Filter (beispielsweise 6) ein Gasfilter ist, das im Bereich
des Absorptionsspektrums der einen Meßkomponente (A) selektiv
absorbiert.

8. Vorrichtung nach Anspruch 6, dadurch gekennzeichnet, daß das
erste Filter (beispielsweise 6) ein Interferenzfilter ist, das im
Bereich des Absorptionsspektrums der einen Meßkomponente (A)
selektiv transmittiert.

9. Vorrichtung nach einem der Ansprüche 6 bis 8, dadurch gekennzeichnet, daß das dritte Filter (beispielsweise 7) ein Gasfilter ist, das
im Bereich des Absorptionsspektrums der anderen Meßkomponente
(B) selektiv absorbiert.

10. Vorrichtung nach einem der Ansprüche 6 bis 8, dadurch gekennzeichnet, daß das dritte Filter (beispielsweise 7) ein Interferenzfilter
ist, das im Bereich des Absorptionsspektrums der anderen Meßkomponente (B) selektiv transmittiert.

0076886

11. Vorrichtung nach einem der Ansprüche 6 bis 10, dadurch gekennzeichnet, daß die Meßwertverarbeitungseinrichtung über einen Regelverstärker (14) - ggf. mit vorgeschaltetem Vorverstärker (13) - an den Detektor (10) angeschlossen ist und über zwei parallel geschaltete frequenzselektierende Filter (15, 16) je mit einem nachgeschalteten phasenempfindlichen Gleichrichter (17, 18) verfügt, wobei beide Gleichrichter (17, 18) je zum Abgleich über einen Phasenschieber (25) an einen Referenzsignalbilder, der mit dem Blendenrad (5) in Zusammenarbeit steht, und ausgangsseitig an einen Tiefpaß (19) angeschlossen sind und wobei die Ausgänge von beiden Tiefpässen (19) über einen Dividierer an das Anzeigegerät (23) angeschlossen sind.

12. Vorrichtung nach einem der Ansprüche 6 bis 10, dadurch gekennzeichnet, daß die Meßwertverarbeitungseinrichtung über einen Regelverstärker (14) - ggf. mit vorgeschaltetem Vorverstärker (13) - an den Detektor (10) angeschlossen ist und über zwei parallel geschaltete frequenzselektierende Filter (15, 16) je mit einem nachgeschalteten phasenempfindlichen Gleichrichter (17, 18) verfügt, wobei beide Gleichrichter (17, 18) je zum Abgleich über einen Phasenschieber (25) an einen Referenzsignalbilder, der mit dem Blendenrad (5) in Zusammenarbeit steht, und ausgangsseitig der eine Gleichrichter (17) an einen Tiefpaß (19) und der andere Gleichrichter (18) an einen Integrator (20) angeschlossen sind und der Integrator (20) ausgangsseitig an einen Regelverstärker (21) angeschlossen ist, der seinerseits eingangsseitig des weiteren an einen Referenzsignalgeber (22) und ausgangsseitig an den zweiten Eingang des dem Detektor (10) nachgeschaltenten Vorverstärkers (14) angeschlossen ist, während der Tiefpaß (19) an das Anzeigegerät (23) angeschlossen ist.

Fig. 1

H. Maihak AG

1/6

9889.0076886

Fig. 2

$I(t)$

$I_1(\lambda_A)$  $I_2(\lambda_0)$  $I_3(\lambda_B)$  $I_4(\lambda_0)$

$0$  $\pi/\omega$  $2\pi/\omega$  $t$

A

$I(\lambda)$

$I_1$  $I_2, I_4$  $I_3$

$\lambda_A$  $\lambda_0$  $\lambda_B$  $\lambda$

B

$T(\lambda)$

$1$

$\tau_A$  $\tau_B$

$\lambda_A$  $\lambda_B$  $\lambda$

C

$T \cdot I(\lambda)$

$I_2, I_4$

$\tau_A \cdot I_1$  $\tau_B \cdot I_3$

$\lambda_A$  $\lambda_0$  $\lambda_B$  $\lambda$

D

$T \cdot I(t)$

$I_2$  $I_4$

$\tau_A \cdot I_1$  $\tau_B \cdot I_3$

$0$  $\pi/\omega$  $2\pi/\omega$  $t$

E

5

Fig. 4

24 25 Δφ(2ω)

Δφ(ω)

ω

10 13 14 16 18 20

2ω

21 22

S₂

15 17 19

ω

S₁

23

H. Maihak AG

7/?

0076886

Fig. 5

E. Malbak AG

5/6

0076886

$Q = [CO] / [C_3H_8]$

$\Sigma = [CO] + [C_3H_8]$

**Europäisches Patentamt**

**EUROPÄISCHER RECHERCHENBERICHT**

0076886

Nummer der Anmeldung

EP 82 10 1067

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A,D | --- <br> US-A-3 994 592 (M. LARDON et al.) <br> * Spalte 7; Figur 6 * | 1 | G 01 N 21/31 |
| A | --- <br> US-A-3 735 127 (R. ASTHEIMER) <br> * Spalten 2,4; Figuren 1,2 * | 1 | |
| A | --- <br> US-A-3 878 107 (J. PEMBROOK et al.) <br> * Spalten 3,4; Figur 1 * | 1 | |
| A | --- <br> US-A-4 177 381 (E. McCLATCHIE et al.) <br> * Spalte 4, Zeilen 12-13; Figuren 3,9 * | 1 | |
| | ----- | | |

|  | RECHERCHIERTE SACHGEBIETE (Int. Cl. 3) |
|---|---|
| | G 01 N 21/31 <br> G 01 N 21/35 <br> G 01 N 21/33 <br> G 01 J 3/42 |

Der vorliegende Recherchenbericht wurde für alle Patentansprüche erstellt.

| Recherchenort <br> DEN HAAG | Abschlußdatum der Recherche <br> 25-01-1983 | Prüfer <br> BOEHM CH.E.D. |
|---|---|---|